Europäisches Patentamt

European Patent Office

Office européen des brevets

(11) Veröffentlichungsnummer: **0 347 630 B1**

(12) **EUROPÄISCHE PATENTSCHRIFT**

(45) Veröffentlichungstag der Patentschrift: **19.11.92**

(21) Anmeldenummer: **89109998.8**

(22) Anmeldetag: **02.06.89**

(51) Int. Cl.5: **F16C 33/46**

(54) **Käfig für Wälzlager.**

(30) Priorität: **22.06.88 DE 3821037**

(43) Veröffentlichungstag der Anmeldung:
**27.12.89 Patentblatt 89/52**

(45) Bekanntmachung des Hinweises auf die
Patenterteilung:
**19.11.92 Patentblatt 92/47**

(84) Benannte Vertragsstaaten:
**DE FR GB IT**

(56) Entgegenhaltungen:
**CH-A- 344 266**       **CH-A- 608 280**
**DE-A- 3 341 970**     **FR-A- 1 521 833**
**GB-A- 972 676**       **US-A- 4 239 304**

(73) Patentinhaber: **INA Wälzlager Schaeffler KG
Industriestrasse 1-3 Postfach 1220
W-8522 Herzogenaurach(DE)**

(72) Erfinder: **Rabe, Jürgen, Dipl.-Ing.
Talblick 6
W-8521 Aurachtal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 347 630 B1

Rank Xerox (UK) Business Services

**Beschreibung**

Die Erfindung betrifft Käfige für Wälzlager, die aus mit Wälzkörpertaschen versehenen Käfigeinzelelementen bestehen, die an ihren Enden in ihrer Bauhöhe reduziert sind und mit dem in der Bauhöhe reduzierten Bereich in axialer Richtung überlappend aneinandergelegt und verbunden sind, bei denen im Bereich der reduzierten Bauhöhe Ausnehmungen und Nasen vorgesehen sind, die beim überlappenden Aneinanderlegen der Käfigeinzelelemente formschlüssig ineinandergreifen. Derartige käfige sind z. B. aus dem Dokument CH-A-344 266 bekannt.

Es sind Kunststoffkäfige für Wälzlager bekannt, bei denen Profilstreifen mit Wälzkörperaussparungen und einseitiger Wälzkörperhalterung flächig aneinandergesetzt und in axialer Richtung überlappend aneinandergelegt und verbunden werden (GB-A 972 676).

Diese Bauart weist den Vorteil auf, daß durch eine entsprechende Anordnung endlicher, identischer Bauteile ein Käfig beliebiger Länge wirtschaftlich erzeugt werden kann.

Bei der Anwendung derartiger Käfige zeigt sich allerdings, daß diese nur mäßigen axialen Zug- und Druckbelastungen standhalten, was insbesondere auf die dadurch hervorgerufenen Scherspannungen in den Verbindungszonen zurückgeführt werden kann. Dies ist auch der Grund dafür, daß nur einige Verbindungsarten angewendet werden können. So reicht für mäßige axiale Belastungen zwar eine Klebeverbindung aus, für höhere Belastungen werden dagegen mechanische Verbindungsarten, wie z. B. Nieten notwendig.

Daneben sind bei der Montage derartiger Käfige aus Profilstreifen maschinelle Maßnahmen zum Ausrichten der Käfigeinzelelemte, insbesondere zum Zentrieren der Wälzkörpertaschen notwendig.

Bekannt ist auch ein Wälzkörperkäfig, der aus einer Mehrzahl von Käfigeinzelelementen besteht, deren vorgeformte Enden zur Erzielung einer Verbindung miteinander verankert sind. Diese Käfigeinzelelemte sind an ihren Enden in der Bauhöhe reduziert und werden hier in axialer Richtung aneinandergelegt (CH-A-344 266). Dabei greifen Nasen und Ausnehmungen außerhalb der Wälzkörpertaschen formschlüssig ineinander, so daß der Käfig hierfür zusätzlichen Bauraum benötigt.

Der Erfindung liegt die Aufgabe zugrunde, einen Käfig mit guter Raumausnutzung zu schaffen, dessen Einzelelemente sich bei der Montage selbständig ausrichten und die Wälzkörpertaschen zentrieren.

Diese Aufgabe wird erfindungsgemäß dadurch gelöst, daß die Käfigeinzelelemente an ihren Enden wenigstens über die Längserstreckung einer Wälzkörpertasche in ihrer Bauhöhe reduziert sind.

Der Formschluß genügt, um Zug- und Druckkräfte in axialer Richtung zwischen den Käfigeinzelelementen zu übertragen. Wird zusätzlich in vorteilhafter Art die Verbindung zwischen den Käfigeinzelelementen durch insbesondere Schnappen, Schweißen, Ultra-Schall-Schweißen oder Ultra-Schall-Nieten im Bereich der Nasen und Ausnehmungen vorgenommen, so sind diese Verbindungsstellen von den maximalen Zug- und Druckkräften entlastet. Aus diesem Grund erstrecken sich in einer besonderen Ausgestaltung der Erfindung die Nasen und Ausnehmungen über die ganze Breite des Steges, um damit eine möglichst große Fläche der formschlüssigen Verbindung zu erreichen.

Es bietet sich außerdem an, durch entsprechende Gestaltung der Nasen und Ausnehmungen die Käfigeinzelelemente auszurichten und damit die Wälzkörpertaschen zu zentrieren.

Einige Ausgestaltungen der Erfindung sind in den Ausführungsbeispielen dargestellt. Es zeigen:

| | |
|---|---|
| Figur 1 | die Käfigenden zweier Käfigeinzelelemente in perspektivischer Darstellung vor dem Zusammenbau; |
| Figur 2 | den zusammengesetzten Käfig in perspektivischer Darstellung; |
| Figur 3 | Schnitt durch die Käfigenden für eine nicht zentrierende Schweißverbindung; |
| Figur 4 | Schnitt durch die Käfigenden für eine selbstzentrierende Schweißverbindung; |
| Figur 5 | Schnitt durch die Käfigenden für eine selbstzentrierende Schnappverbindung; |
| Figur 6 | Schnitt durch die Käfigenden für eine selbstzentrierende Verbindung durch Ultra-Schall-Nieten; |
| Figur 7 | Schnitt durch die Käfigenden für eine selbstzentrierende Klebeverbindung und |
| Figur 8 | Schnitt durch die Käfigenden für eine selbstzentrierende Schweißverbindung mit reduzierter Bauhöhe im Bereich mehrerer Taschen. |

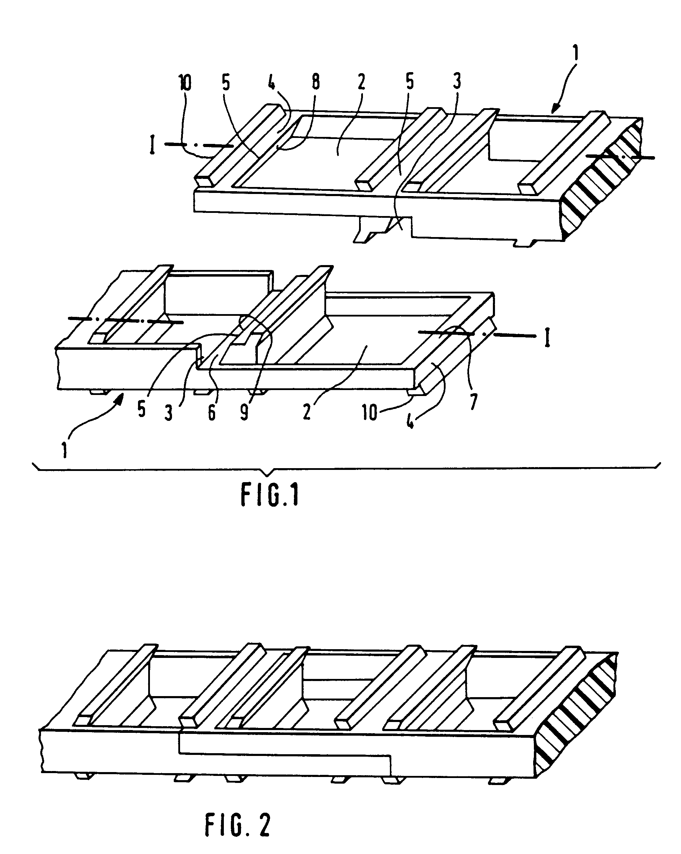

Die Darstellung in Figur 1 zeigt die einander zugeordneten Enden zweier erfindungsgemäßer Käfigeinzelelemte 1. Die Enden sind im Bereich einer Wälzkörpertasche 2 in ihrer Bauhöhe reduziert und in diesem Bereich mit Ausnehmungen 3 und Nasen 4 versehen, die sich hier über die gesamte Breite der Stege 5 erstrecken und beim Zusammensetzen formschlüssig ineinander greifen. Die Verbindung erfolgt vorteilhaft im Bereich der Fläche 6 an der Ausnehmung 3 und der Fläche 7 an der Nase 4. Durch entsprechende Neigung der Fläche 8 an der Ausnehmung 3 und der Fläche 9 an der Nase 4 werden die Käfigeinzelelemente 1 ausgerichtet und die Wälzkörpertaschen 2 zentriert. Da die Wälzkörpertaschen 2 zum Teil durch die Nasen 4 begrenzt sind, sind an den Nasen 4 Wälzkörperhalterungen 10 vorgesehen.

Figur 2 zeigt die zum Käfig zusammengesetzten Käfigeinzelelemente nach den Zusammenbau in perspektivischer Darstellung, wobei ersichtlich wird, wie durch das formschlüssige Ineinadergreifen der Nasen 4 und Ausnehmung 3 eine in axialer Richtung auf Zug und Druck belastbare Verbindung der Käfigeinzelelemente entsteht.

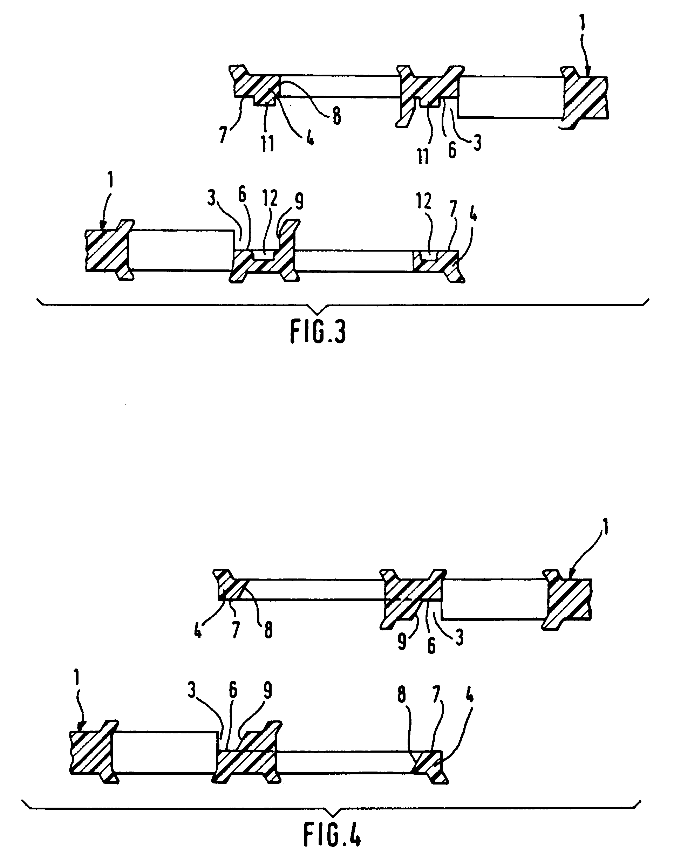

In Figur 3 ist ein Schnitt durch die Enden zweier Käfigeinzelelemente entsprechend der Linie I-I in Figur 1 dargestellt. Dieser Schnitt zeigt die Gestaltung der Enden der Käfigeinzelelemente für eine Schweißverbindung ohne Selbstzentrierung. Der Aufbau entspricht im wesentlichen der Figur 1, jedoch sind im Bereich der Fläche 6 der Ausnehmung 3 und der Fläche 7 der Nase 4 Zapfen 11 und Nuten 12 vorgesehen. Bei der Montage werden die Zapfen 11 erwärmt und in die Nuten 12 gedrückt, so daß sich nach Erkalten eine feste Schweißverbindung ergibt. Die Fläche 8 an der Nase 4 und die Fläche 9 an der Ausnehmung 3 sind in diesem Ausführungsbeispiel nicht aufeinander abgestimmt, was ein maschinelles Ausrichten der Käfigeinzelelemte zueinander notwendig macht.

Die Darstellung in Figur 4 zeigt einen entsprechenden Schnitt durch die Enden der Käfigeinzelelemente für eine Schweißverbindung mit Selbstzentrierung. Die Schweißverbindung erfolgt durch Energiezufuhr an den Flächen 7 der Nasen 4 und den Flächen 6 der Ausnehmungen 3. Durch eine angepaßte Neigung der Flächen 8 an den Nasen 4 und Flächen 9 an den Ausnehmungen 3 werden die Käfigeinzelelemente 1 ausgerichtet und die Wälzkörpertaschen zentriert.

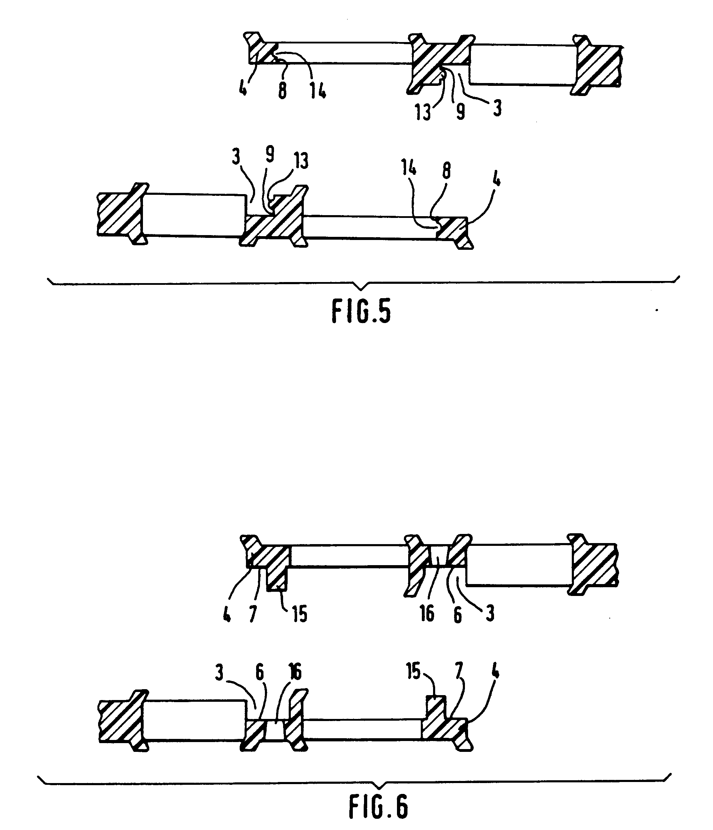

Figur 5 zeigt einen Schnitt durch die Enden der Käfigeinzelelemente für eine selbstzentrierende Schnappverbindung. Die Verbindung selbst und die Zentrierung der Käfigeinzelelemente erfolgt zwischen den Flächen 8 an den Nasen 4 und den Flächen 9 an den Ausnehmungen 3. Die Feder 13 schnappt in die Nut 14, so daß ein Auseinanderfallen der Käfigeinzelelemente nicht möglich ist.

In Figur 6 ist ein Schnitt durch die Enden der Käfigeinzelelemente für eine Verbindung durch Ultra-Schall-Nieten dargestellt. Bei der Montage werden die Zapfen 15 an den Flächen 7 der Nasen 4 durch die nach außen konisch verlaufende Bohrung 16 in der Fläche 6 gesteckt, anschließend mittels Ultraschall erweicht und so gestaucht, daß die konische Bohrung 16 vollständig ausgefüllt ist.

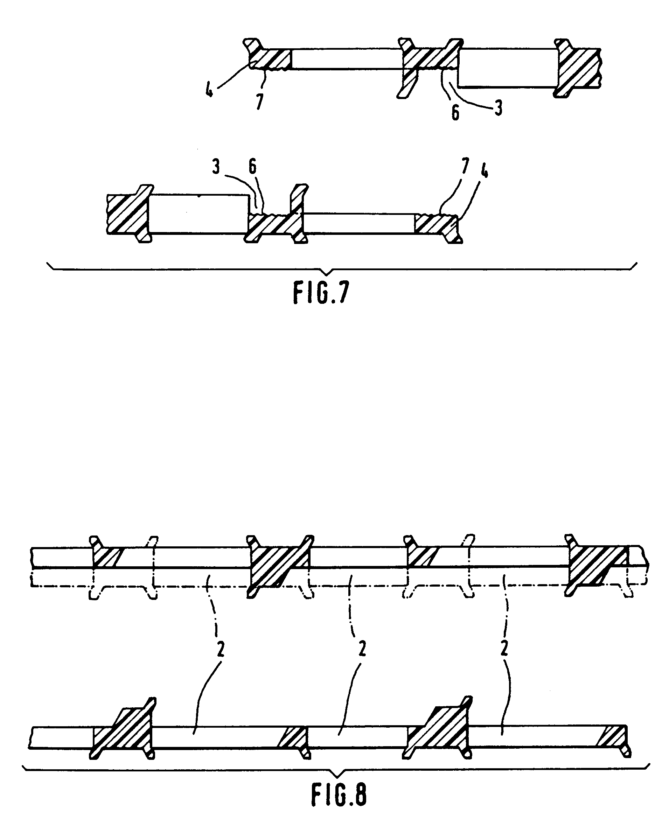

In Figur 7 ist ein entsprechender Schnitt durch die Enden der Käfigeinzelelemente für eine Klebeverbindung dargestellt. Die Klebeflächen 6, 7 sind in Längsrichtung angeordnet. Aufgrund der ineinandergreifenden Nasen 4 und Ausnehmungen 3 werden die Klebestellen bei Zug- und Druckbelastungen des Käfigs in axialer Richtung nicht scherend belastet, so daß auch verklebte Käfigeinzelelemente relativ hoch belastet werden können.

In Figur 8 ist ein Schnitt durch die Käfigelemente für eine zentrierende Schweißverbindung dargestellt, wobei sich der Bereich der reduzierten Bauhöhe über mehrere Wälzkörpertaschen 2 erstreckt. Der Aufbau entspricht im wesentlichen einer Aneinanderreihung der bereits in Figur 4 dargestellten Verbindungsart. Für die übrigen Verbindungsarten sind ähnliche mehrtaschige Überlappungen möglich.

## Patentansprüche

1. Käfig für Wälzlager, bestehend aus mit Wälzkörpertaschen (2) versehenen Käfigeinzelelementen (1), die an ihren Enden in ihrer Bauhöhe reduziert sind und mit dem in der Bauhöhe reduzierten Bereich in axialer Richtung überlappend aneinandergelegt und verbunden sind, bei denen im Bereich der reduzierten Bauhöhe Ausnehmungen (3) und Nasen (4) vorgesehen sind, die beim überlappenden Aneinanderlegen der Käfigeinzelelemente formschlüssig ineinandergreifen, **dadurch gekennzeichnet,** daß die Käfigeinzelelemente (1) an ihren Enden wenigstens über die Längserstreckung einer Wälzkörpertasche (2) in ihrer Bauhöhe reduziert sind.

2. Käfig für Wälzlager nach Anspruch 1, **dadurch gekennzeichnet,** daß die Neigung von Flächen (8) an den Nasen (4) mit der Neigung von Flächen (9) an den Ausnehmungen (3) übereinstimmt, so daß über die Ausnehmungen (3) und Nasen (4) die Käfigelemente ausgerichtet und die Wälzkörpertaschen (2) zentriert sind.

3. Käfig für Wälzlager nach Anspruch 1, **dadurch gekennzeichnet,** daß die Verbindung, insbesondere durch Schweißen, Schnappen oder Ultraschall-Nieten im Bereich der Ausnehmungen (3) und Nasen (4) erfolgt.

4. Käfig für Wälzlager nach Anspruch 1, **dadurch gekennzeichnet,** daß die Ausnehmungen (3) und Nasen (4) sich jeweils über die gesamte Stegbreite erstrecken.

5. Käfig für Wälzlager nach Anspruch 4, **dadurch gekennzeichnet,** daß die Nasen (4) die Wälzkörpertaschen (2) zum Teil begrenzen und mit Wälzkörperhalterungen (10) versehen sind.

## Claims

1. Rolling bearing cage made of individual cage elements (1) comprising rolling element pockets (2), the individual cage elements having a reduced design height at their ends and being placed on each other to overlap in the axial direction in the region of reduced design height and joined together, recesses (3) and lugs (4) being provided in the region of reduced design height which interlock with each other when the individual cage elements are placed on each other to overlap, characterized in that the ends of the individual cage elements (1) have a reduced design height over the longitudinal extent of at least one rolling element pocket (2).

2. Rolling bearing cage according to claim 1, characterized in that the inclination of surfaces (8) of the lugs (4) corresponds to the inclination of surfaces (9) of the recesses (3) so that the cage elements are aligned and the rolling element pockets (2) centered with the help of the recesses (3) and lugs (4).

3. Rolling bearing cage according to claim 1, characterized in that the joint is made in particular by welding, by snap connections or by ultrasonic riveting in the region of the recesses (3) and lugs (4).

4. Rolling bearing cage according to claim 1, characterized in that the recesses (3) as well as the lugs (4) extend across the entire width of the web.

5. Rolling bearing cage according to claim 4, characterized in that the lugs (4) partially delimit the rolling element pockets (2) and are provided with rolling element retainers (10).

**Revendications**

1. Cage pour palier à roulement du type comprenant des éléments individuels de cage (1) munis de poches (2) des corps roulants et ayant, à leurs extrémités, une hauteur de construction réduite, lesquels éléments sont reliés entre eux et placés les uns sur les autres de manière à se chevaucher en direction axiale dans la région d'hauteur de construction réduite, des évidements (3) et des talons (4) étant prévus dans la région d'hauteur de construction réduite qui, lors de la mise en chevauchement mutuel des éléments individuels de cage s'engagent les uns dans les autres par concordance de forme, caractérisée en ce qu'à leurs extrémités les éléments individuels de cage (1) ont une hauteur de construction réduite sur au moins l'étendue longitudinale d'une poche (2) des corps roulants.

2. Cage pour palier à roulement selon la revendication 1, caractérisée en ce que l'inclinaison de surfaces (8) des talons (4) correspond à l'inclinaison de surfaces (9) des évidements (3), de sorte que, par l'intermédiaire des évidements (3) et des talons (4), les éléments de cage sont alignés et les poches (2) des corps roulants centrées.

3. Cage pour palier à roulement selon la revendication 1, caractérisée en ce que la liaison est réalisée en particulier par soudage, par encliquetage ou par rivetage à ultrasons dans la région des évidements (3) et des talons (4).

4. Cage pour palier à roulement selon la revendication 1, caractérisée en ce que les évidements (3) et les talons (4) s'étendent chacun sur la largeur entière de l'entretoise.

5. Cage pour palier à roulement selon la revendication 4, caractérisée en ce que les talons (4) délimitent en partie les poches (2) des corps roulants et en ce qu'ils sont munis de moyens de retenue (10) des corps roulants.

EP 0 347 630 B1

FIG.1

FIG. 2

5

FIG.3

FIG.4

FIG.5

FIG.6

FIG.7

FIG.8